Europäisches Patentamt

European Patent Office

Office européen des brevets

(11) Veröffentlichungsnummer: **0 139 927**
A2

## (12) EUROPÄISCHE PATENTANMELDUNG

(21) Anmeldenummer: **84109409.7**

(22) Anmeldetag: **08.08.84**

(51) Int. Cl.⁴: **F 16 C 7/00**

(30) Priorität: **06.09.83 CH 4869/83**

(43) Veröffentlichungstag der Anmeldung:
**08.05.85 Patentblatt 85/19**

(84) Benannte Vertragsstaaten:
**AT DE FR GB IT**

(71) Anmelder: **GEORG FISCHER AKTIENGESELLSCHAFT
Mühlentalstrasse 105
CH-8201 Schaffhausen(CH)**

(72) Erfinder: **Mahnig, Fritz
Forstweg 13
CH-8200 Schaffhausen(CH)**

(72) Erfinder: **Schulte, Günter
Moltkestrasse 51c
D-5620 Velbert 1(DE)**

(72) Erfinder: **Schmitt, Hans
Emil Beerli Strasse 19
D-4020 Mettmann(DE)**

(54) **Pleuel.**

(57) Es wird ein Pleuel vorgeschlagen, dessen Schaft (3) einen im wesentlichen wellenförmigen Querschnitt aufweist. Der wellenförmige Verlauf des Querschnittes des Pleuelschaftes kann sowohl in einer rechtwinklig gebrochenen Linie als auch sinusförmig erfolgen. Der vorgeschlagene Pleuel ist in einem Giessverfahren hergestellt und besteht vorzugsweise aus Gusseisen mit Kugelgraphit oder aus Temperguss.

Durch die vorgeschlagene Formgebung wird eine Kombination von giesstechnischen und festigkeitsmässigen Vorteilen erzielt. Einerseits wird durch Vermeidung von Materialanhäufung die Lunkerbildung verhindert, andererseits werden die Bauteilfestigkeitswerte durch die Wellenform erheblich gesteigert.

EP 0 139 927 A2

./...

Fig. 1

2389/MET

-  -

GEORG FISCHER AKTIENGESELLSCHAF,        8201 Schaffhausen

2389/MET / 5.9.1983 / MS-mw /

Pleuel

Die vorliegende Erfindung betrifft einen Pleuel mit einem grossen und einem kleinen Lagerauge und einem die Lageraugen verbindenden Schaft.

Der Pleuel dient zur Verbindung eines hin- und hergehenden Kolbens mit dem Kurbelzapfen einer sich drehenden Kurbelwelle. Der Pleuel muss allen Beanspruchungen im Betrieb standhalten, d.h., er darf nicht brechen. Darüber hinaus muss er steif halten.

Die technische Entwicklung zielt einerseits auf Gewichtseinsparung, andererseits auf höhere Drehzahlen und infolge dessen auf stärker belastete Pleuelstangen. Um die geforderte Betriebssicherheit eines Pleuels zu gewährleisten, muss die Formgestaltung, Materialauswahl und die Herstellungsqualität den gestellten erhöhten betrieblichen Anforderungen genügen.

Herkömmliche Gusspleuel werden mit einem doppel T-förmigen Pleuelschaft von 3 bis 5 mm gegossen, so dass in den

0139927

- -   -

Knotenpunkten im Mittelsteg wegen der geringen Kühlung
Lunkerbildungen nur durch aufwendige giesstechnische .
Massnahmen zu verhindern sind.

Verschiedene Querschnittsformen sind für den Pleuelschaft
bekannt: Längliche, quatratische oder rechteckige Querschnitte mit abgerundeten Ecken, sowie ovale und eliptische
Querschnitte. Solche Schaftquerschnitte können infolge
der Materialanhäufung oft die Fehlerquelle sein, die zum
Ausschuss des Pleuels führt.

Aufgabe der vorliegenden Erfindung ist es, einen Pleuel vorzuschlagen, bei dem durch freie Formgebung im Schaftbereich bei gleichbleibender Bauteilfestigkeit einerseits
Gewichtseinsparungen erzielt werden, andererseits durch
Verminderung des Lunkervolumens eine Qualitätsverbesserung
erzielt wird.

Diese Aufgabe wird durch die Lehre des Anspruches 1
gelöst.

Weitere vorteilhafte Ausgestaltungen gehen aus den
abhängigen Ansprüchen hervor.

Anhand der beigelegten Figuren wird ein bevorzugtes
Ausführungsbeispiel näher erläutert.

Es zeigen:

Fig. 1          eine Draufsicht auf einen erfindungsgemässen Pleuel,

Fig. 2 -        Querschnitte des Pleuelschaftes aus der
    4           Fig. 1.

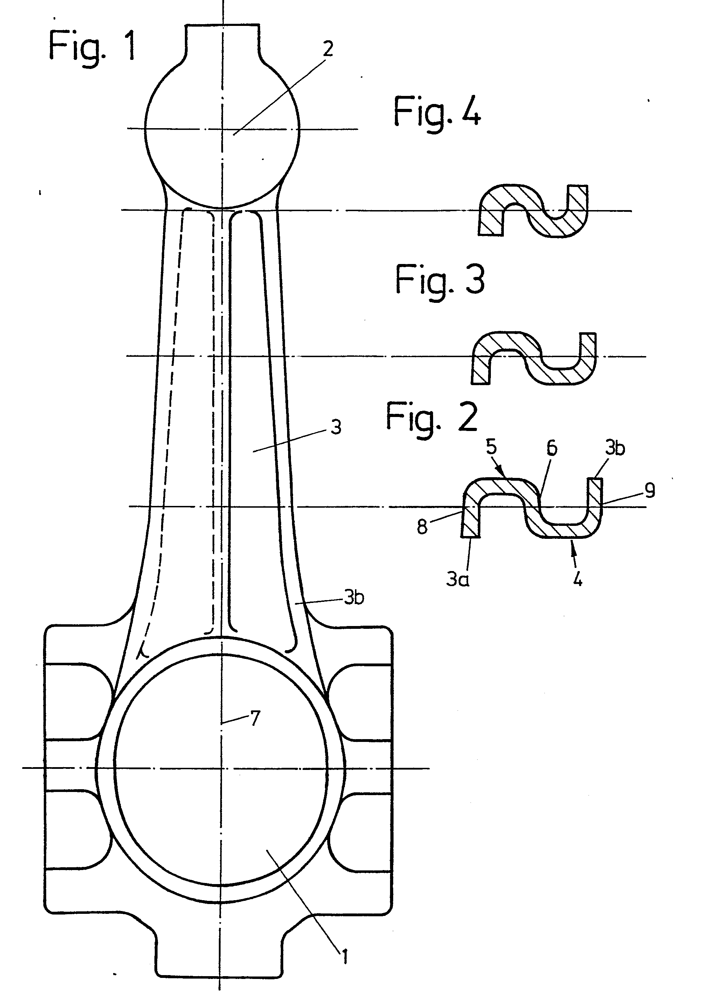

Die Fig. 1 zeigt einen Pleuel, der im wesentlichen aus einem grossen Lagerauge 1, einem kleinen Lagerauge 2 und einem die beiden Lageraugen verbindenden Schaft 3 besteht. Der Verbindungsschaft weist einen im wesentlichen wellenförmigen Querschnitt auf. Die Wellenform des Schaftes besteht aus einem Wellental 4 und aus einem Wellenberg 5. Diese Wellenelemente sind entlang des gesamten Schaftes 3 vorgesehen und reichen vom kleinen Lagerauge 2 zum grossen Lagerauge 1. Sowohl der Wellenberg 5 wie das Wellental 4 nehmen vom kleinen Lagerauge 2 in Richtung des grossen Lagerauges 1 an Breite zu. Der vom Wellental 4 zum Wellenberg 5 übergehende Bereich 6 des Schaftes 3 verläuft zwischen den beiden Lageraugen in der Symmetrieachse 7 des Pleuels. Der Wellenverlauf im Querschnitt des Schaftes ist im wesentlichen eine rechtwinklig gebrochene Wellenlinie, wobei auch ein sinusförmiger Verlauf denkbar ist.

Der Schaft 3 weist seitlich verlaufende Schenkel 8 und 9 auf, die die Lageraugen miteinander verbinden. Die freien Ränder 3a, 3b der Schenkel ragen diametral voneinander weg. Im Bereich des Ueberganges vom Schaft 3 zu den Lageraugen laufen die Wellentäler und die Wellenberge bogenförmig aus.

Der beschriebene Pleuel wird vorzugsweise in einem Giessverfahren hergestellt. Die vorgeschlagene Formgebung des Pleuelschaftes ist insbesondere aus giesstechnischer Sicht vorteilhaft, weil sich Materialanhäufungen vermeiden lassen und eine im wesentlichen gleichbleibende Wandstärke erzielt wird. Die wellenförmige Ausgestaltung bringt zudem festigkeitsmässig besondere Vorteile.

- -

Als Material für die Herstellung des beschriebenen Pleuels
eignen sich besonders Gusseisen mit Kugelgraphit und
perlitischer Temperguss.

P a t e n t a n s p r ü c h e

2389/MET

1. Pleuel mit einem grossen und einem kleinen Lagerauge und einem die Lageraugen verbindenden Schaft, dadurch gekennzeichnet, dass der Schaft (3) einen im wesentlichen wellenförmigen Querschnittt aufweist.

2. Pleuel nach Anspruch 1, dadurch gekennzeichnet, dass die Welle einen rechtwinklig gebrochenen Verlauf aufweist.

3. Pleuel nach Anspruch 1, dadurch gekennzeichnet, dass die Welle einen sinusförmigen Verlauf aufweist.

4. Pleuel nach Anspruch 1, dadurch gekennzeichnet, dass der vom Wellental (4) zum Wellenberg (5) übergehende Bereich (6) entlang der Symmetrieachse (7) des Pleuels verläuft.

5. Pleuel nach Anspruch 1, dadurch gekennzeichnet, dass die Wandstärke des Schaftes (3) über einen beliebigen Querschitt im wesentlichen gleich ist.

6. Pleuel nach Anspruch 1, dadurch gekennzeichnet, dass die freien Ränder (3a, 3b) der seitlich verlaufenden, die zwei Lageraugen (1, 2) miteinander verbindenden Schenkel, diametral voneinander wegragen.

7. Pleuel nach Anspruch 1, dadurch gekennzeichnet, dass die Wellentäler (4) und die Wellenberge (5) bogenförmig zu den Lageraugen (1, 2) auslaufen.

8. Pleuel nach einem der Ansprüche 1 bis 7, dadurch gekennzeichnet, dass er in einem Giessverfahren hergestellt ist.

9. Pleuel nach einem der Ansprüche 1 bis 7, dadurch gekennzeichnet, dass er aus Temperguss besteht.

10. Pleuel nach einem der Ansprüche 1 bis 7, dadurch gekennzeichnet, dass er aus Gusseisen mit Kugelgraphit besteht.

0139927

Fig. 1

Fig. 4

Fig. 3

Fig. 2

2389/MET